Europäisches Patentamt

European Patent Office

Office européen des brevets

(19)

(11) **EP 0 652 080 B1**

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int. Cl.$^6$: **B25B 23/14**, B23P 19/06

(21) Anmeldenummer: **94115419.7**

(22) Anmeldetag: **30.09.1994**

(54) **Schlag- oder Impulsschraubverfahren und -vorrichtung**

Impuls or impact screwing method and apparatus

Procédé et dispositif de vissage à chocs ou à impulsion

(84) Benannte Vertragsstaaten:
**DE FR GB SE**

(30) Priorität: **26.10.1993 DE 4336465**

(43) Veröffentlichungstag der Anmeldung:
**10.05.1995 Patentblatt 1995/19**

(73) Patentinhaber: **ROBERT BOSCH GMBH**
**70442 Stuttgart (DE)**

(72) Erfinder:
• **Layer, August, Dr. Dipl.-Ing.**
**D-74613 Oehringen (DE)**
• **Rudolf, Hans, Dipl.-Ing. (FH)**
**D-71560 Sulzbach (DE)**
• **Grammer, Bernd, Dipl.-Ing.**
**D-71717 Beilstein (DE)**
• **Veitinger, Heinz, Dipl.-Ing. (FH)**
**D-71540 Murrhardt (DE)**

(56) Entgegenhaltungen:
EP-A- 0 119 928      EP-A- 0 133 557
EP-A- 0 552 990      US-A- 3 969 810
US-A- 4 358 735

**Beschreibung**

Die Erfindung geht aus von einem Verfahren bzw. einem Schlag- oder Impulsschrauber zum Festziehen einer Schraube nach der Gattung der nebengeordneten Ansprüche 1 und 5. Es ist schon bekannt, eine Schraube beispielsweise bis zum Erreichen der Fließgrenze festzuziehen. Dabei wird das aufzuwendende Drehmoment beispielsweise über einen Drehmomentsensor oder über die Stromaufnahme des Antriebsmotors gemessen und der Schraubvorgang bei Erreichen eines vorgegebenen Grenzwertes abgeschaltet. Bei Schlag- oder Impulsschraubern ist jedoch eine Drehmomentmessung sehr ungenau, da bei dem impulsweisen Drehmomentaufbau der Schlag- oder Impulseinheit jeweils die Haftreibung zwischen dem Schraubenkopf und der Auflage überwunden werden muß. Dieser Wechsel zwischen der Haft- und der Gleitreibung verfälscht das wirksame Drehmoment für das Festziehen der Schraube. Dadurch ist das eigentliche Anziehdrehmoment der Schraube praktisch nicht bekannt, und zudem wird das Anziehdrehmoment sehr stark von der Schlag- und Impulseinheit beeinflußt. Dementsprechend schwanken auch die Vorspannkräfte in der Schraube sehr stark.

Im erfindungsgemäßen Verfahren nach Anspruch 1 bzw. bei der Verwendung des Schlag- oder Impulsschraubers ach Anspruch 5 spielt durch die Erfassung der Vorspannkraft der Schraube während des Verschraubungsvorgangs die Reibung am Schraubenkopf und dem Gewinde nur noch eine untergeordnete Rolle. Es wird praktisch nur die Kraft in der Schraube erfaßt, die beim Anziehen der Schraube eine Dehnung bewirkt, so daß aufwendige Meßverfahren zur Bestimmung der Vorspannkraft nicht erforderlich sind. Dabei wird ausgenutzt, daß die Vorspannkraft bei Schlag- und Impulsschraubern stufenartig zunimmt und diese stufenartige Zunahme als Informationen zum Steuern der Verschraubung sowie für Plausibilitätsbetrachtungen verwendbar sind.

Durch die in den abhängigen Ansprüchen aufgeführten Maßnahmen sind vorteilhafte Weiterbildungen und Verbesserungen der in den nebengeordneten Ansprüchen angegebenen Gegenstände möglich. Besonders vorteilhaft ist, daß die Vorspannkraft der Schraube mittels eines Dehnungsmeßstreifens oder eines Piezosensors erfaßt werden kann, der vorzugsweise am Schraubenkopf oder an der Schraubvorrichtung angebracht ist. Durch die Änderung des Widerstandswertes ergibt sich bei jedem Drehmomentimpuls eine sprunghafte Änderung des Widerstandes, die einfach meßbar ist.

Eine besonders sichere Erfassung der Vorspannkraft in der Schraube ergibt sich vorteilhaft nach dem Ultraschall-Laufzeitmeßverfahren, bei dem die Laufzeit von in die Schraube eingekoppelten Ultraschall-Longitudinalwellen oder/-Transversalwellen gemessen wird. Dabei sind die zeitlichen Abstände der empfangenen Reflexionssignale ein direktes Maß für die Vorspannkraft in der Schraube.

Aus der US 3,969,810 ist ein luftgetriebener Schlagschrauber bekannt, bei dem zum Festziehen der Schraube die Dehnung bzw. Längenänderung der Schraube gemessen wird. Die Längenänderung ist ein Maß für die Spannung in der Schraube, wenn diese angezogen wird. Die Längenänderung wird mit einem Ultraschall-Sensor beim Anziehen der Schraube erfaßt und führt zum Abschalten des Schraubvorganges, wenn ein voreingestellter Wert erreicht wird.

Bei einem Schlagschrauber, gemäß der US 4,358,735 wird nach jedem Schlag die Abbremsverzögerung des Schlaghammers während des Festschraubens erfaßt. Ist bei zwei aufeinander folgenden Schlägen der Verzögerungswert geringer als beim vorherigen Schlag, dann wird der Schraubvorgang abgebrochen. Des weiteren wird vorgeschlagen, im Anschluß daran den Schraubvorgang noch für einige Schläge oder einen bestimmten Drehwinkel fortzuführen.

Aus der EP 552 990 A1 ist ein Schlagschrauber bekannt, bei dem mittels eines Mikrophons die einzelnen Schläge erfaßt und mit einem Zähler gezählt werden. Zum Festziehen der Schraube wird eine maximale Drehzahl sowie ein Drehmoment vorgegeben. Das Drehmoment wird mittels einer Rutschkupplung begrenzt. Bei Überschreiten des eingestellten Drehmomentes wird der Schlagschrauber erst abgeschaltet, wenn die voreingestellte Schlagzahl erreicht wurde.

Durch Kombination der Zählung von Drehmomentimpulsen mit der Messung der Vorspannkraft kann auf einfache Weise auch eine Plausibilitätsprüfung durchgeführt werden. Dadurch können Fehler bei der Verschraubung vermieden werden und die Funktionssicherheit der Verschraubung vorteilhaft überwacht werden.

Da die Vorspannkraft sich bei jedem Drehmomentimpuls sprunghaft ändert, ergibt sich eine sichere Erfassung der Vorspannkraft. Durch Erfassung der Änderung von Impuls zu Impuls ist leicht erkennbar, ob die Schraube die Streckgrenze erreicht hat, da die Stufenhöhe von einem Impuls zum nächsten zunächst abnimmt und dann wegen der plastischen Verformung der Schraube wieder zunimmt.

Durch die Kombination der Messung der Vorspannkraft und Zählung der Stufen bzw. der Drehmomentimpulse ergibt sich vorteilhaft eine einfache Überprüfung der Meß- und Zählwerte, da eine signifikante Abweichung eine Fehlmessung der Vorspannkraft bedeutet.

Vorteilhaft für den Schlag- oder Impulsschrauber ist weiter, daß eine Anzeige vorgesehen ist, auf der der Istwert der Vorspannkraft und/oder des Abschaltwertes ausgebbar ist. Auf der Anzeige kann beispielsweise durch Leuchtdioden oder anderer Anzeigen ausgegeben werden, ob die Verschraubung in Ordnung (IO-Verschraubung) oder nicht in Ordnung ist (NIO-Verschraubung). Durch die Anzeigen lassen sich vorteilhaft auch Fehler bei der Eingabe oder beim Festziehen der Schraube leicht erkennen.

Zeichnungen

Ein Ausführungsbeispiel ist in den Zeichnungen dargestellt und in der nachfolgenden Beschreibung näher erläutert. Es zeigen Figur 1 ein Blockschaltbild einer Schraubvorrichtung, Figur 2a und 2b ein Diagramm und Figur 3 ein Flußdiagramm.

Beschreibung des Ausgangsbeispiels

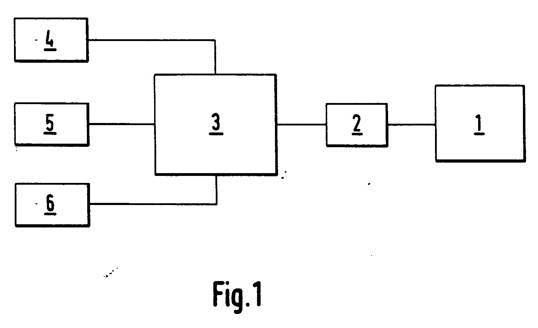

Figur 1 zeigt ein Blockschaltbild eines Schlag- oder Impulsschraubers 1 mit einer Steuerung 3, die über ein Stellglied oder einen Schalter 2 mit dem Schlag- oder Impulsschrauber 1 verbunden ist. Die Steuerung 3 enthält eine Meßelektronik zur Messung der Schraubparameter, die mit einen oder mehreren Meßsensoren 5 sowie einem Impulszähler 4 verbunden ist. Der Impulszähler 4 ist als Zähler ausgebildet und zählt die einzelnen Drehmomentimpulse, die auf die Schraube aufgebracht werden und mit denen eine Vorspannkraft aufgebaut wird. Der Meßsensor 5 arbeitet beispielsweise nach dem Ultraschall-Laufzeitverfahren und sendet mit 1...10 KHz Wiederholfrequenz eine Longitudinalwelle und/-oder Transversalwelle kontinuierlich in den Schraubenkopf. Diese Ultraschallwellen werden reflektiert, vom Meßsensor 5 empfangen und in ein elektrisches Signal gewandelt. Die Meßelektronik mißt jeweils die Laufzeit der Ultraschallwelle durch die Schraube. Nach jedem Drehmomentimpuls ändert sich die Laufzeit sprunghaft, da sich die Vorspannung in der Schraube auch sprunghaft ändert. Das Ultraschall-Laufzeitverfahren ist per se aus der GB2090976A oder EP460920A1 bekannt und muß daher nicht mehr erörtert werden. Die Anwendung von Dehnungsmeßstreifen zur Erfassung von geringsten Längenveränderungen ist ebenfalls dem Fachmann bekannt und muß daher nicht erläutert werden. Weiterhin sind Sensoren bekannt, die die Schraubenverformung erfassen können. Geeignete Sensoren sind beispielsweise auch Piezosensoren, die eine Widerstandsänderung nach dem Piezoeffekt haben.

Die Steuerung 3 enthält vorzugsweise einen Mikroprozessor mit einem Speicher und einer entsprechenden Ein-/Ausgabe sowie einer persebekannten Motorsteuerung für die Schraubvorrichtung und auch die notwendige Meßelektronik, wie Verstärker, Laufzeitmesser usw. Mittels des Stellgliedes 2 wird der Schlag- oder Impulsschrauber gesteuert. Ein Schlag- oder Impulsschraubermotor 1 wird üblicherweise mit Preßluft angetrieben, wobei das Schlagwerk entweder mechanisch über Rastenscheiben oder hydraulisch über einen Druckzylinder angetrieben werden kann. Derartige Schraubwerkzeuge werden beispielsweise in Autowerkstätten zum Lösen oder Festschrauben von Radmuttern verwendet.

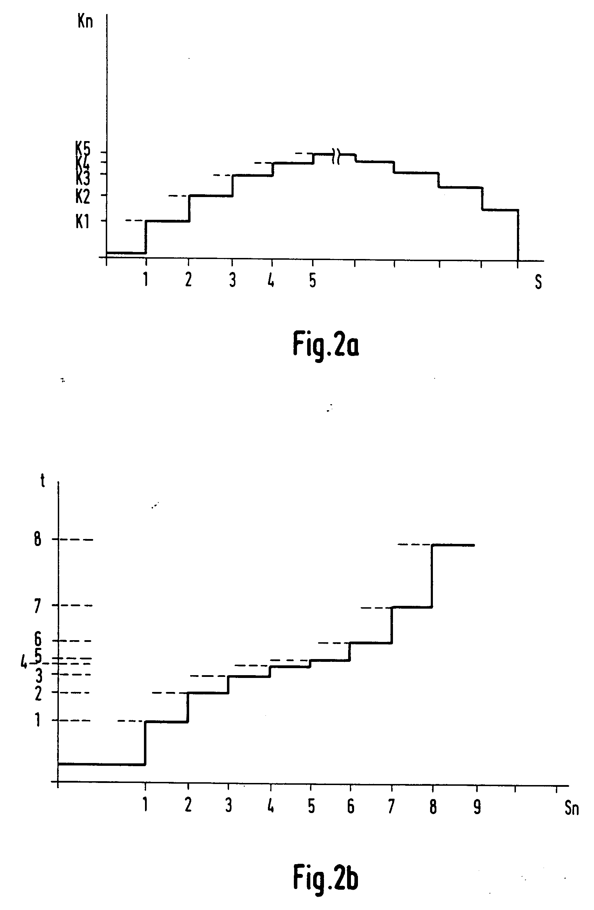

Figur 2a zeigt ein Diagramm, bei dem die Vorspannkraft K schematisch über die Drehmomentimpulsanzahl aufgetragen ist. Die Vorspannkraft wurde dabei aus der Ultraschall-Laufzeitänderung oder einer Widerstandsänderung beispielsweise mit einem Mikroprozessor berechnet, wobei Kalibrierfaktoren mit berücksichtigt sind. Diese Kurve gilt natürlich nur für ein bestimmtes Schraubwerkzeug und für eine bestimmte Schraube mit einer bestimmten Länge, Durchmesser oder Material. Die Vorspannkraft K der Schraube ist bis zum Aufsetzen des Kopfes auf die Oberfläche praktisch Null. Erfolgt danach ein erster Drehmomentimpuls S1, dann steigt die Vorspannkraft sprunghaft auf den Wert K1 an. Beim nächsten Schlag oder Impuls S2 steigt die Kraft auf den Wert K2 usw., bis z. B. im Schritt S5 die Kraft K5 erreicht ist. Wie dem Diagramm weiter entnehmbar ist, ist der Amplitudensprung von einem Schlag oder Impuls S zum nächsten Schlag oder Impuls S + 1 nicht proportional und erreicht bei höherer Gesamtzahl der Schläge oder Impulse kleinere Werte. Die kleineren Werte bedeuten, daß das Haftreibungsmoment langsam so groß wie das Drehimpulsmoment des Schraubwerkzeugs wird oder daß die Materialbeanspruchung der Schraube in den plastischen Bereich kommt.

Bei genauer Kenntnis der Randbedingungen kann eine Aussage über die Ursache der kleiner werdenden Werte gemacht werden, oder es müssen die reinen Meßwerte betrachtet werden. Für eine bestimmte Schraubverbindung können somit bestimmte Werte vorgegeben werden, die vorteilhaft im Speicher der Steuerung 3 abgelegt sind und dann für die Ansteuerung verwendbar sind.

Figur 2b zeigt ein Diagramm, bei dem die Meßgröße Ultraschall-Laufzeit und Widerstandswert über der Drehmomentimpulsanzahl aufgetragen sind. Der genaue Kurvenverlauf hängt natürlich sehr stark von dem verwendeten Schraubwerkzeug und der Schraubverbindung ab.

Im elastischen Materialbeanspruchungsbereich der Schraube nehmen die Amplitudensprünge der Meßwerte zunächst ab. Wird die Schraube über die Elastizitätsgrenze hinaus angezogen, dann nehmen die Amplituden-Sprünge wieder zu, weil im plastischen Beanspruchungsbereich mit jedem Drehmomentimpuls eine überproportional größere Dehnung der Schraube verursacht wird. Die Steuerung 3 überwacht nun die jeweiligen Änderungswerte und kann so den Übergang vom elastischen zum plastischen Bereich sicher erkennen. Die Änderungswerte lassen jedoch noch weitere Aussagen über die Verschraubung zu, beispielsweise über die Härte des Schraubfalls.

Der Vorteil, insbesondere des Ultraschall-Laufzeitmeßverfahrens liegt darin, daß der zulässige Grenzwert K5 später nachkontrolliert werden kann, selbst wenn der Schraubvorgang lange zurückliegt.

Da die Kurve mit zunehmender Drehimpulszahl S abflacht, kann das Erreichen der Fließgrenze auch

durch Auswertung der jeweiligen Amplitudenänderung der Vorspannkraft K bei jedem Drehimpuls S betrachtet werden. Erreicht die Differenz, z. B. K5 - K4 einen bestimmten Minimalwert, wie es im Schritt 5 dargestellt wurde, dann kann die Differenz oder das Verhältnis zum Abschalten des Schraubvorganges verwendet werden. Die Kombination der doppelten Erfassung der Vorspannkraft, einmal über die direkte Messung nach dem Dehnungsmeßstreifen-Verfahren oder dem Ultraschall-Verfahren in Verbindung mit der Zählung der Drehimpulse hat den Vorteil, daß auch Fehler in der Schraubvorrichtung selbst durch einfache Plausibilitätsbetrachtung überprüft werden können. Die Schraubvorrichtung ist daher in der Lage, sich selbst zu überwachen und kann im Fehlerfall eine Alarmmeldung an den Bediener abgeben. Zu diesem Zweck ist vorteilhaft eine Anzeige vorgesehen, die neben den Schraubparameterwerten auch eine Alarmmeldung ausgeben kann.

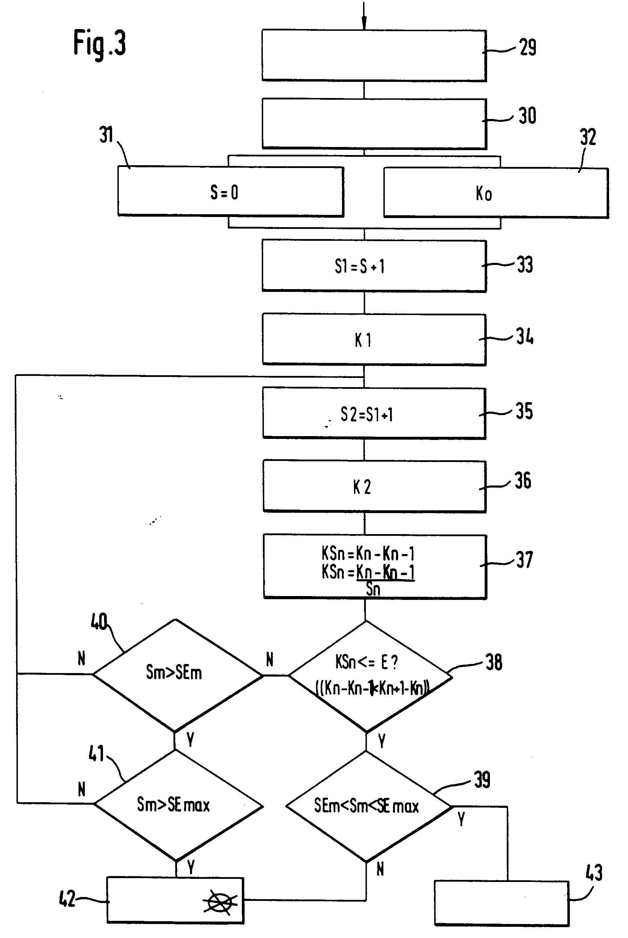

Anhand des Flußdiagramms der Figur 3 wird der Funktionsablauf bei Vorspannkraftauswertung und bei der Meßwertänderungsauswertung dieser Schraubvorrichtung näher erläutert. In Pos. 29 werden der Steuerung 3 die wesentlichen Parameter für das Schraubverfahren durch eine Eingabeschnittstelle mitgeteilt. Dies ist z. B. die der gewünschten Vorspannkraft entsprechende Meßwertänderung, Ultraschall-Laufzeitänderung oder Widerstandsänderung des Dehnungsmeßstreifens oder eines anderen dehnungsmessenden Sensors, die bis zum Erreichen der gewünschten Vorspannkraft notwendige Drehmomentimpuls-Anzahl mit zulässigem Bereich und die Meßwertänderung, die sich bei den herrschenden Randbedingungen bei der geforderten Vorspannkraft einstellt und hier als Abschaltparameter E dient.

In Pos. 30 wird die Energieversorgung zum Motor des Schraubwerkzeugs freigegeben, und der Schrauber beginnt die Schraube zunächst ohne Vorspannkraftaufbau einzudrehen.

Gleichzeitig wird in Position 31 der Impulszähler 4 mit S = 0 gesetzt, damit definierte Startbedingungen vorliegen. Der Zähler kann aber auch erst bei einer bestimmten Lastschwelle auf S = 0 gesetzt werden. Bei Pos. 32 wird ebenfalls unmittelbar nach Pos. 30 die Meßwerterfassung mit einer Wiederholrate zwischen 10 und 10 000 Messungen/s nach einem der vorher beschriebenen Verfahren begonnen und der Vorspannkraftwert K0 gemessen. Nun wird in Pos. 33 ein erster Drehmomentimpuls S1 = S + 1 in die Schraube eingeleitet und in Pos. 34 die Vorspannkraft K1 gemessen. In Pos. 35 wird der Drehimpuls S2 = S1 + 1 in die Schraube eingeleitet und bei Pos. 36 die zugehörigen Meßwerte bestimmt und die Vorspannkraft K2 berechnet. In Pos. 37 wird nun aus der Differenz der beiden Vorspannkräfte K2 - K1 entweder in bezug oder nicht in bezug auf den Drehmomentimpuls 2 ein Abschaltfaktor KSn gebildet. In Pos. 38 wird abgefragt ob KSn kleiner oder gleich dem Abschaltparameter E ist.

KSn ist dabei definiert als Differenzwert

$$KSn = Kn - K_{n-1} \text{ oder als}$$

$$\text{Verhältniswert } KSn = \frac{Kn - K_{n-1}}{Sn}$$

Wobei n die Anzahl der bereits in die Schraube eingeleiteten Drehmomentimpulse darstellt.

Ist das nicht der Fall, läuft der Anziehvorgang wie ab Pos. 35 kontinuierlich weiter, d. h. in die Schraube wird ein weiterer Drehmomentimpuls eingeleitet. Dieser Zyklus läuft so lange ab, bis in Position 38 der Abschaltwert E erreicht ist. Ist das der Fall, wird bei Pos. 39 überprüft, ob die Drehmomentimpulsanzahl in dem vorgegebenen Bereich liegt. Ist das der Fall, wird der Verschraubungsvorgang beendet (Position 43), und ein neuer Schraubvorgang kann begonnen werden. Liegt die Drehmomentimpulsanzahl außerhalb des vorgegebenen Bereichs, dann kann eine Fehlermeldung erfolgen.

In weiterer Ausgestaltung der Erfindung kann parallel zu dem zuvor genannten Verfahren nach Pos. 38 in Pos. 40 abgefragt werden, ob die Drehmomentimpulsanzahl Sm größer ist als eine minimale, vorgegebene Abschalt-Drehmomentimpuls-Anzahl SEm. Ist das nicht der Fall, kann der Ablauf bei Pos. 35 weitergeführt werden. Bei Pos. 41 wird dann abgefragt, ob die Drehmomentimpulsanzahl Sm größer als eine maximale, vorgegebene Abschalt-Drehmomentimpuls-Anzahl SEmax ist. Ist dies der Fall, dann ist ein Fehler der Schraubvorrichtung anzunehmen. In diesem Fall wird dann die Schraubvorrichtung abgeschaltet und ein Fehlersignal ausgegeben. Ist dies nicht der Fall, wird die Verschraubung wie ab Pos. 35 weitergeführt.

In weiterer Ausgestaltung der Erfindung kann z. B. bei Pos. 38 von der Steuerung überwacht werden, ob die Meßwertänderungsstufen (Ultraschall-Laufzeitänderung oder Widerstandsänderung) zunächst abnehmen und dann wieder zunehmen. Diese Information, wie sich die Meßwertstufen beim Anziehen ändern, kann auch zur Beendigung des Verschraubungsvorganges herangezogen werden.

Die Plausibilitätsüberprüfungen können auch hier wie schon beschrieben durchgeführt werden.

Die Verschraubung würde dann beendet, wenn Kn - (Kn-1) < (Kn+1) - Kn werden würde. Dabei müssen gewisse Toleranzen in den Unterschieden berücksichtigt werden. Übergänge vom elastischen zum plastischen Materialbeanspruchungsbereich können so erkannt werden.

**Patentansprüche**

1. Verfahren zum Festziehen einer Schraube, mit einem Schlag- oder Impulsschrauber, der durch einzelne Drehmomentimpulse die Schraube schrittweise festzieht und dabei die eine Schraubenverformung bewirkende Vorspannkraft (K) der Schraube durch Messung einer physikalischen Größe erfaßt, dadurch gekennzeichnet, daß die Anzahl der Drehmomentimpulse ($S_n$) eines Schraubvorgangs gezählt werden, daß jeweils nach einem Drehmomentimpuls ($S_n$) die durch den Drehmomentimpuls bewirkte Änderung der Vorspannkraft ($K_n$-$K_{n-1}$) bestimmt wird und daß bei Erreichen eines vorgegebenen Wertes für die Änderung der Vorspannkraft (K) der Schraubvorgang abgeschaltet wird, wenn ein vorgegebener Bereich für die Anzahl der Drehmomentimpulse (Sn) erreicht wurde.

2. Verfahren nach Anspruch 1, dadurch gekennzeichnet, daß die Vorspannkraft (K) der Schraube mittels eines Dehnungsmeßstreifens oder eines Piezosenors erfaßt wird.

3. Verfahren nach Anspruch 1, dadurch gekennzeichnet, daß die Vorspannkraft (K) der Schraube mit einem Ultraschall-Laufzeitmeßverfahren erfaßt wird.

4. Verfahren nach einem der vorhergehenden Ansprüche, dadurch gekennzeichnet, daß die bis zum Abschalten des Schlag- oder Impulsschraubers gezählte Anzahl der Drehmomentimpulse ($S_n$) sowie die entsprechenden, bis zum Abschalten gemessenen Vorspannkräfte (K) auf Plausibilität überprüft werden.

5. Schlag- oder Impulsschrauber zur Durchführung des Verfahrens nach einem der vorhergehenden Ansprüche, mit wenigstens einem Meßsensor (5) für die Erfassung der Vorspannkraft der Schraube, mit einer Steuerung (3) mit einem Eingabemittel zur Eingabe eines der geforderten Vorspannkraft entsprechenden Abschaltwertes (E), mit Rechenmitteln zur Bestimmung eines jeweiligen Istwertes anhand der Meßwerte des Meßsensors und zum jeweiligen Vergleich mit dem Abschaltwert (E) derart, daß der Schlag- oder Impulsschrauber beim erreichen der geforderten Vorspannkraft Abschaltbar ist, und mit einer Datenausgabe, dadurch gekennzeichnet, daß der Schlag- oder Impulsschrauber einen Zähler zur Zählung der Drehmomentimpulse eines Schraubvorganges aufweist, daß sich die Steuerung zur Bestimmung eines jeweiligen Istwertes eignet, der zur durch einen jeweiligen der Drehmomentimpuls bewirkten jeweiligen Änderung der Vorspannkraft korrespondiert, und daß die Steuerung durch Auswertung des jeweiligen Istwertes in Abhängigkeit des eingegebenen Abschaltwertes (E) für die Vorspannkraft und unter Berücksichtigung der Anzahl der Drehmomentimpulse den Schlag- oder Impulsschrauber abschaltet.

6. Schlag- oder Impulsschrauber nach Anspruch 5, dadurch gekennzeichnet, daß die Datenausgabe eine Anzeige für einen Istwert der Vorspannkraft und/oder den Abschaltwert aufweist.

7. Schlag- oder Impulsschrauber nach Anspruch 5 oder 6, dadurch gekennzeichnet, daß die Datenausgabe ausgebildet ist, eine gute Verschraubung (Verschraubung in Ordnung) oder eine schlechte Verschraubung (Verschraubung nicht in Ordnung) auszugeben.

**Claims**

1. Method for tightening a screw, using a hammer-action or impulse screwdriver which tightens the screw step-by-step by individual torque impulses and at the same time detects the prestress force (K) which produces screw deformation in the screw, by measuring a physical variable, characterized in that the number of torque impulses ($S_n$) in a screwdriving process is counted, in that, after each torque impulse ($S_n$), the change in the prestress force ($K_n$-$K_{n-1}$) caused by the torque impulse is determined, and in that, on reaching a predetermined value for the change in the prestress force (K), the screwdriving process is switched off when a predetermined range has been reached for the number of torque impulses (Sn).

2. Method according to Claim 1, characterized in that the prestress force (K) on the screw is detected by means of a stress gauge or a piezo-sensor.

3. Method according to Claim 1, characterized in that the prestress force (K) on the screw is detected using an ultrasound delay time measurement method.

4. Method according to one of the preceding claims, characterized in that the number of torque impulses ($S_n$) which have been counted before the hammer-action or impulse screwdriver is switched off as well as the corresponding prestress forces (K) measured before switching off are checked for plausibility.

5. Hammer-action or impulse screwdriver for carrying out the method according to one of the preceding claims, having at least one measurement sensor (5) for detecting the prestress force on the screw, having a controller (3) with an input means for inputting a switching-off value (E) corresponding to the required prestress force, having calculation means for determining their respective actual value based on the values measured by the measurement sensor and for respective comparison with the switching-off value (E) in such a manner that the hammer-action or impulse screwdriver can be switched off on reaching the required prestress force, and having a data output, characterized in that the hammer-action or impulse screwdriver has a counter for counting the torque impulses of a screwdriving process, in that the controller is suitable for determining a respective actual value which corresponds to the respective change in the prestress force produced by one respective torque impulse, and in that the controller switches off the hammer-action or impulse screwdriver by evaluation of the respective actual value as a function of the input switching-off value (E) for the prestress force and taking account of the number of torque impulses.

6. Hammer-action or impulse screwdriver according to Claim 5, characterized in that the data output has an indicator for an actual value of the prestress force and/or the switching-off value.

7. Hammer-action or impulse screwdriver according to Claim 5 or 6, characterized in that the data output is designed to output a good screw connection (screw connection satisfactory) or a poor screw connection (screw connection not satisfactory).

**Revendications**

1. Procédé de serrage d'une vis à l'aide d'une visseuse à impacts ou à impulsions qui effectue le serrage pas à pas de la vis par des impulsions de couple et détecte la force de précontrainte (K) de la vis provoquant une déformation de la vis en mesurant d'une grandeur physique, caractérisé en ce qu'

   - on compte le nombre d'impulsions de couple ($S_n$) d'une opération de vissage,
   - chaque fois après une impulsion de couple ($S_n$), on détermine la variation de la force de précontrainte ($K_n - K_n$) provoquée par l'impulsion de couple et,
   - lorsqu'on atteint une valeur prédéterminée de la variation de la force de précontrainte (K), on arrête le vissage lorsqu'on atteint une plage prédéterminée pour le nombre des impulsions de couple (Sn).

2. Procédé selon la revendication 1, caractérisé en ce qu' on détecte la force de précontrainte (K) de la vis à l'aide d'une jauge de contrainte ou d'un capteur piézo-électrique.

3. Procédé selon la revendication 1, caractérisé en ce qu' on détecte la force de précontrainte (K) de la vis selon un procédé de mesure de temps de parcours d'ultrasons.

4. Procédé selon l'une des revendications précédentes, caractérisé en ce qu' on vérifie la plausibilité du nombre des impulsions de couple ($S_n$) comptées jusqu'à la coupure de la visseuse par impacts ou impulsions ainsi que les forces de précontrainte (K) mesurées jusqu'à la coupure.

5. Visseuse par impacts ou impulsions pour la mise en oeuvre du procédé selon l'une quelconque des revendications précédentes, comprenant

   • au moins un capteur de mesure (5) pour saisir la force de précontrainte de la vis,
   • une commande (3) comprenant un moyen d'entrée pour introduire une valeur de coupure (E), correspondant à la précontrainte demandée,
   • des moyens de calcul pour déterminer une certaine valeur réelle à l'aide des valeurs de mesure du capteur, et pour comparer chaque fois avec la valeur de coupure (E) pour que la visseuse par impacts ou impulsions puisse être coupée lorsqu'on atteint une force de précontrainte demandée
   • et une sortie de données, caractérisée en ce que
   • la visseuse comporte un compteur pour compter les impulsions de couple d'une opération de vissage,
   • la commande convient pour déterminer une valeur réelle respective,
   • pour provoquer par une impulsion de couple respective, chaque fois une variation de la force de précontrainte et,
   • la commande coupe la visseuse en fonction de l'exploitation de la valeur réelle respective dépendant de la valeur de coupure introduite (E) pour la force de précontrainte et en tenant compte du nombre des impulsions de couple,

6. Visseuse selon la revendication 5, caractérisée en ce que la sortie de données comprend un moyen d'affichage pour une valeur réelle de la force de précontrainte et/ou la valeur de coupure.

7. Visseuse selon la revendication 5 ou 6, caractérisée en ce que la sortie de données permet d'afficher un bon vissage (vissage en ordre) ou un mauvais vissage (vissage défectueux).

Fig.1

Fig.2a

Fig.2b

**Fig.3**

29

30

| S = 0 | | Ko |
|---|---|---|
31 | | 32

$S1 = S + 1$ — 33

K 1 — 34

$S2 = S1 + 1$ — 35

K 2 — 36

$KSn = Kn - Kn - 1$
$KSn = \dfrac{Kn - Kn - 1}{Sn}$ — 37

40 — Sm > SEm    KSn <= E ?
$((Kn - Kn - 1 < Kn + 1 - Kn))$ — 38

N    N    N

Y    Y

41 — Sm > SEmax    SEm < Sm < SEmax — 39

N

Y    N    Y

42 — ⊗    43